Europäisches Patentamt

European Patent Office

Office européen des brevets

(11) Numéro de publication: **0 363 257**

**A1**

## (12) DEMANDE DE BREVET EUROPEEN

(21) Numéro de dépôt: 89402669.9

(22) Date de dépôt: 28.09.89

(51) Int. Cl.5: **B60K 17/344**

(30) Priorité: 28.09.88 FR 8812695

(43) Date de publication de la demande:
11.04.90 Bulletin 90/15

(34) Etats contractants désignés:
DE ES GB IT SE

(71) Demandeur: **Garnier, Michel**
**Parc des Tourelles 4 impasse de**
**l'Echauguette**
**F-91000 Evry Village(FR)**

(72) Inventeur: **Garnier, Michel**
**Parc des Tourelles 4 impasse de**
**l'Echauguette**
**F-91000 Evry Village(FR)**

(74) Mandataire: **Clanet, Denis et al**
**Cabinet Beau de Loménie 55, rue**
**d'Amsterdam**
**F-75008 Paris(FR)**

(54) **Ensemble de transformation d'un véhicule à deux roues motrices en véhicule à quatre roues motrices.**

(57) L'invention concerne un ensemble de transformation d'un véhicule à deux roues motrices en véhicule à quatre roues motrices, pour un véhicule comportant un ensemble moteur-boîte de vitesses transversal, caractérisé en ce qu'il comprend un boîtier (26) destiné à être monté en lieu et place d'un couvercle d'extrémité de boîte de vitesses, ledit boîtier portant un pignon d'entrée (34) solidarisé en rotation avec l'arbre des pignons fous de la boîte de vitesses, au moins un pignon relais (52) à denture droite en prise avec le pignon d'entrée (34), et un ensemble de renvoi d'angle (58) à pignons coniques (66, 72) ayant un demi-axe d'entrée (60) entraîné par le pignon relais (52) et un demi-axe de sortie (68) orienté dans la direction longitudinale du véhicule et entraînant un arbre longitudinal (28) de transmission vers un pont (30) de roues arrière.

Fig.2

# ENSEMBLE DE TRANSFORMATION D'UN VEHICULE A DEUX ROUES MOTRICES EN VEHICULE A QUATRE ROUES MOTRICES

La présente invention concerne un ensemble de transformation d'un véhicule à deux roues motrices en véhicule à quatre roues motrices.

On assiste actuellement à une demande importante de petits véhicules a quatre roues motrices dérivés de véhicules standards de la gamme des grands constructeurs automobiles, conçus et développés habituellement pour la traction avant à deux roues motrices et équipés d'un ensemble moteur-boîte transversal.

Les entreprises assurant cette transformation, soit en tant que sous-traitants, soit pour leur propre compte, cherchent naturellement à la réaliser sans modifier profondément le groupe moteur-boîte-transmission fabriqué par le constructeur d'origine, afin d'une part de ne pas modifier sensiblement les organes garantis par le constructeur, et d'autre part d'aboutir à un prix de vente aussi compétitif que possible.

Une solution classique consiste à remplacer la couronne de différentiel du pont avant par une couronne équipée d'une denture supplémentaire conique coopérant avec un pignon conique destiné à l'entraînement de l'arbre de transmission vers les roues arrière.

Ceci nécessite non seulement le remplacement de la couronne de différentiel mais également le remplacement du boîtier de différentiel afin d'abriter le pignon conique, son axe et ses paliers. De plus, l'altitude du point de départ de l'arbre de transmission arrière est imposée par l'altitude du différentiel avant.

Or, divers véhicules proposés actuellement sur le marché comportent un groupe moteur-boîte de vitesses en ligne, l'extrémité du carter de boîte se terminant par un couvercle faisant face à l'extrémité de l'arbre des pignons fous, et adjacent aux pignons et synchro de 4ème ou 5ème vitesse selon l'option choisie.

L'ensemble de transformation selon la présente invention comporte un boîtier destiné à être monté en lieu et place du couvercle d'extrémité du carter, ce boîtier portant un pignon d'entrée à denture droite, comportant des moyens de solidarisation en rotation avec l'arbre des pignons fous de la boîte de vitesses en bout dudit arbre, au moins un pignon relais à denture droite en prise avec le pignon d'entrée, et un ensemble de renvoi à pignons coniques ayant un demi-arbre d'entrée entraîné par le pignon relais et un demi-arbre de sortie destiné à entraîner un arbre longitudinal de transmission vers un pont de roues arrière.

On comprendra donc que l'invention permet une transformation simple d'un véhicule à deux roues motrices en véhicule à quatre roues motrices. Il suffit, en effet de démonter le couvercle existant en bout de boîte de vitesses, et de le remplacer par le boîtier de transformation, en mettant le pignon d'entrée en prise avec l'arbre des pignons fous de la boîte par les moyens de solidarisation prévus à cet effet, et l'on dispose ainsi au niveau du demi-arbre de sortie du renvoi d'angle d'un mouvement d'entraînement rotatif fonction du rapport de boîte engagé et directement transmissible à l'arbre de transmission vers le pont de roues arrière.

De plus, on peut ajuster le rapport pignon d'entrée/pignon relais, en fonction du rapport de pont arrière choisi afin d'obtenir une vitesse d'entraînement des roues arrière identique à la vitesse d'entraînement des roues avant.

De préférence, l'ensemble de transformation conforme à l'invention comprendra un pignon menant à denture droite calé sur le demi-arbre d'entrée du renvoi conique et engrenant avec le pignon relais; il sera ainsi possible de placer ce demi-arbre d'entrée, et donc l'ensemble de renvoi à pignons coniques à une altitude différente de l'arbre des pignons fous de la boîte, au dessus, ou au dessous, afin que l'ensemble de renvoi soit situé à une altitude différente d'autres organes du véhicule, notamment au dessus des demi-arbres d'entraînement des roues avant.

Bien entendu, un dispositif de crabotage conventionnel est disposé entre le demi-arbre de sortie de l'ensemble de renvoi et l'arbre de transmission longitudinal. L'ensemble pont arrière et l'essieu arrière, rigide ou non, peuvent être de tout type conventionnel.

Les avantages et autres détails de l'invention apparaîtront clairement à la lecture de la description qui va suivre, en se référant aux dessins annexés, dans lesquels :

- la figure 1 est une vue schématique en plan d'un ensemble de transformation conforme à la présente invention,

- la figure 2 est une vue de dessus en coupe de l'ensemble de transformation suivant la ligne II à la figure 3,

- la figure 3 est une vue latérale intérieure de l'ensemble de transformation.

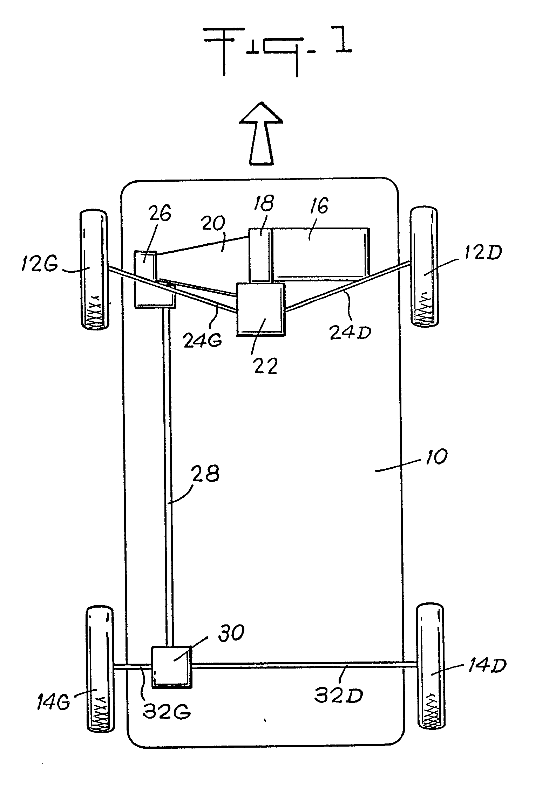

Comme illustré schématiquement à la figure 1, un véhicule automobile 10 à quatre roues, soit deux roues avant 12G, 12D et deux roues arrière 14G et 14D comprend un moteur 16 transversal placé à l'avant, un embrayage 18, une boîte de vitesses 20 et un différentiel 22 depuis lequel partent deux demi-arbres 24G, 24D d'entraînement des roues avant.

La boîte de vitesses 20 comporte à son extrémité opposée au moteur 16 un capot de fermeture démontable situé en regard des divers arbres de la boîte de vitesses, notamment l'arbre des pignons fous, qui comme bien connu, a une vitesse de rotation fonction du rapport engagé et attaque le différentiel d'entraînement des roues avant.

Conformément à l'invention, ce capot est remplacé par un boîtier 26 abritant des pignons et un renvoi d'angle destinés à l'entraînement d'un arbre de transmission longitudinal 28 aboutissant à un pont arrière 30, comprenant un différentiel et deux demi-arbres d'entraînement 32G, 32D des roues arrière.

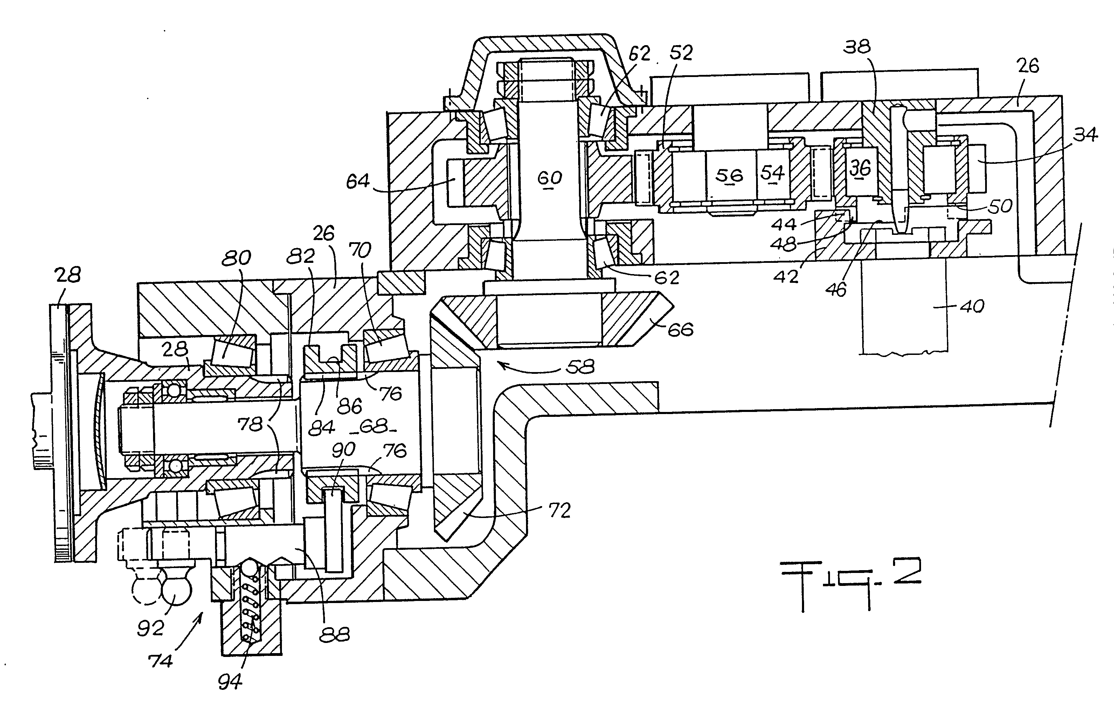

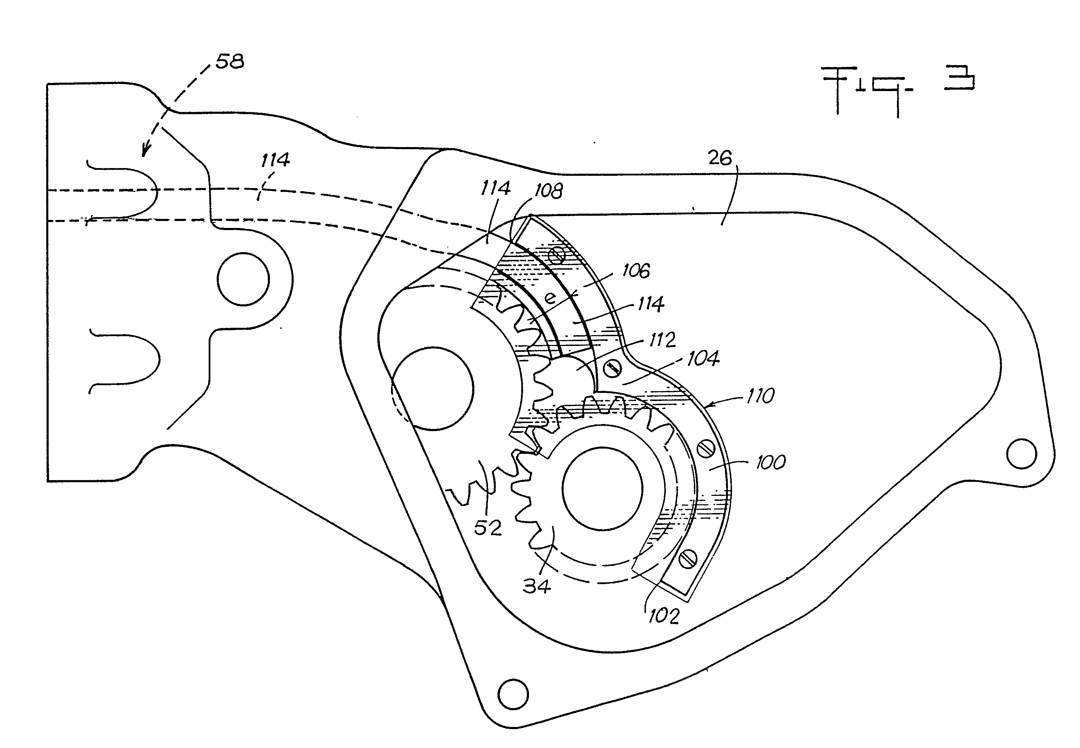

Comme illustré aux figures 2 et 3, le boîtier 26 porte un pignon d'entrée 39 à denture droite tourillonnant au moyen d'un palier 36 sur un axe 38 solidaire du boîtier et coaxial à l'arbre des pignons fous 40. Le pignon d'entrée 34 et l'arbre des pignons fous 40 comportent des moyens de solidarisation en rotation, qui pourront être réalisés par tout moyen à la portée de l'homme de métier.

Dans le mode de réalisation illustré, une bague intermédiaire 42 est fixée en bout d'arbre. La bague intermédiaire comporte trois saillies axiales 44 décalées de 120° et séparées par des dépressions 46, et le pignon 34 comporte également trois saillies 48 axiales séparées par des dépressions 50, qui s'emboîtent dans les dépressions et les saillies de la bague intermédiaire 42.

Le boîtier 26 porte un pignon relais 52 également à denture droite, tourillonnant au moyen d'un palier 54 sur un axe 56 solidaire du boîtier, et engrenant avec le pignon d'entrée 34.

Le boîtier 26 porte également un dispositif à renvoi d'angle 58, comportant un demi-axe d'entrée 60 tourillonnant au moyen de paliers 62 dans le boîtier et portant un pignon menant 64 également à denture droite en prise avec le pignon relais 52 et calé sur le demi-axe d'entrée, celui-ci se terminant par un pignon d'entrée conique 66 à 45°, et un demi-axe de sortie 68, tourillonnant au moyen de paliers 70 dans le boîtier et portent un pignon de sortie 72 conique à 45°, engrenant avec le pignon d'entrée conique 66.

De la sorte, le demi-axe de sortie 68 s'étend sensiblement dans la direction longitudinale du véhicule. Dans l'alignement de ce demi-axe de sortie est disposé l'arbre de transmission 28 aux roues arrière, avec interposition de paliers 80 et d'un dispositif de crabotage 74 qui peut être de tout type connu.

Dans le mode de réalisation illustré, le demi-axe de sortie 68 du renvoi d'angle comporte des gorges longitudinales 76, et l'arbre de transmission 28 comporte également des gorges longitudinales 78 correspondantes. Un fourreau d'accouplement 82 cylindrique muni de nervures longitudinales 84 internes et d'une gorge circonférentielle 86 externe est monté sur le demi-axe de sortie 68 du renvoi d'angle.

Ce fourreau d'accouplement 82 est déplaçable axialement au moyen d'un coulisseau 88 pourvu d'un doigt de commande 90 en saillie radiale et engagé dans la gorge 86 du fourreau.

Le coulisseau comporte également une rotule latérale 92, destinée à être attaquée par un levier de commande manuelle non représenté, comme bien connu.

Le coulisseau 88 et le fourreau 82 sont mobiles conjointement entre une position de repos, telle que représentée à la figure 2, dans laquelle le fourreau 82 est complètement engagé sur le demi-axe de sortie 68 du renvoi d'angle 58 et il n'assure aucune transmission de couple vers l'arbre de transmission 28, et une position d'accouplement, déplacée vers la gauche à la figure, dans laquelle le fourreau 82 chevauche les extrémités du demi-axe de sortie 68 du renvoi d'angle et de l'arbre de transmission 28, assurant ainsi une transmission de couple de l'un vers l'autre.

Un dispositif 94 à bille et ressort coopère avec des entailles décalées axialement sur le coulisseau 88 pour maintenir celui-ci dans l'une ou l'autre des deux positions malgré les chocs ou vibrations du véhicule.

Comme on le comprendra, l'invention facilite la prise de mouvement en sortie de boîte de vitesses afin de transformer un véhicule à deux roues motrices en véhicule à quatre roues motrices.

D'une part, le rapport des dentures entre les pignons à denture droite, c'est-à-dire le pignon d'entrée 34, le pignon relais 52, et le pignon menant 64 de renvoi d'angle peut être facilement ajusté en fonction du rapport de pont arrière 30 afin d'assurer une vitesse de rotation des roues arrière 14G, 14D égale à la vitesse de rotation des roues avant 12G, 12D.

D'autre part, ces pignons successifs peuvent être placés à des altitudes choisies afin de placer le demi-axe de sortie 68 du renvoi d'angle et donc l'arbre de transmission 28 vers les roues arrière à une altitude compatible avec les autres organes du véhicule. En particulier, on pourra réhausser l'arbre de transmission 28, afin de passer au-dessus des demi-arbres de transmission 24G, 24D aux roues avant.

En complément, l'invention prévoit des moyens pour assurer une bonne lubrification des paliers et pignons qui viennent d'être décrits.

En effet, le niveau de l'huile de lubrification dans le carter de la boîte de vitesses est déterminé pour une lubrification suffisante des composants de la boîte de vitesses; cependant, étant donné que les pignons successifs et le dispositif de renvoi d'angle sont positionnés à des altitudes progressivement croissantes, l'élévation de l'huile jusqu'aux éléments situés le plus haut pose un problème.

A cet effet, comme illustré à la figure 3, le pignon d'entrée 34 et le pignon relais 52 sont utilisés comme pompe à engrenage afin d'élever l'huile à la hauteur désirée.

Dans le boîtier 26 sont prévues des nervures entourant au moins partiellement les deux pignons. Une première nervure 100 entoure le pignon d'entrée 34 avec faible jeu, au moins sur un secteur qui va d'un point inférieur 102 situé sous le niveau d'huile dans la boîte de vitesse jusqu'à un point supérieur 104 proche de la zone de séparation des dentures des deux pignons.

Une seconde nervure 106 entoure le pignon relais 52 avec un espacement e au moins sur un secteur qui va d'un point inférieur coïncidant avec le point supérieur 104 de la première nervure 100, jusqu'à un point supérieur 108 situé approximativement au-dessus du pignon relais 52.

Du côté de la boîte de vitesses, une plaque de fermeture 110 est fixée au boîtier 26. Elle couvre les deux nervures précitées 100, 106, ainsi que les moitiés supérieures des deux pignons.

Il se trouve ainsi défini entre le boîtier, le pignon relais, la seconde nervure et la plaque de fermeture un conduit incurvé 112, de largeur e et d'épaisseur égale à la longueur des pignons, vers lequel le pignon d'entrée et le pignon relais refoulent de l'huile du fait de leur engrènement.

Un tube 114 prend naissance dans le conduit ainsi défini, pour aboutir dans la partie supérieure du dispositif de renvoi d'angle ; ce tube permet ainsi de véhiculer l'huile nécessaire à la lubrification des pignons coniques du renvoi d'angle, du fourreau de crabotage, et des différents paliers associés.

L'huile s'écoule ensuite naturellement en retour vers le carter de la boîte de vitesses.

Bien que le pont arrière 30 ait été illustré en position décentrée, face à la sortie du renvoi d'angle, il va de soi que ce pont arrière peut être disposé au centre du véhicule, auquel cas l'arbre 28 fera un angle avec l'axe du véhicule, et des joints de type cardan seront montés à chaque bout de l'arbre 28.

**Revendications**

1. Ensemble de transformation d'un véhicule à deux roues motrices en véhicule à quatre roues motrices, pour un véhicule comportant un ensemble moteur-boîte de vitesses transversal, caractérisé en ce qu'il comprend un boîtier (26) destiné à être monté en lieu et place d'un couvercle d'extrémité de boîte de vitesses, ledit boîtier portant un pignon d'entrée (34) muni de moyens de solidarisation (42) en rotation avec l'arbre des pignons fous de la boîte de vitesses en bout dudit arbre, au moins un pignon relais (52) à denture droite en prise avec le pignon d'entrée (34), et un ensemble de renvoi d'angle (58) à pignons coniques (66, 72) ayant un demi-axe d'entrée (60) entraîné par le pignon relais (52) et un demi-axe de sortie (68) orienté sensiblement dans la direction longitudinale du véhicule et destiné à entraîner un arbre longitudinal (28) de transmission vers un pont (30) de roues arrière, caractérisé en ce que le dispositif à renvoi d'angle (58) comporte un pignon menant (64) à denture droite, calé sur le demi-axe d'entrée (60) et en prise avec le pignon relais (52), et en ce que le pignon d'entrée (34), le pignon relais (52) et le pignon menant (64) du dispositif de renvoi d'angle sont situés à des altitudes différentes.

2. Ensemble selon la revendication 1, caractérisé en ce que lesdits pignons sont situés à des altitudes croissantes.

3. Ensemble selon la revendication 2, caractérisé en ce que les rapports de denture du pignon d'entrée, du pignon relais et du pignon menant sont choisis en fonction du rapport de pont arrière (30).

4. Ensemble selon l'une des revendications 1 à 3, caractérisé en ce que le boîtier (26) comporte des nervures (100, 106) entourant au moins partiellement le pignon d'entrée (34) et le pignon relais (52) de telle sorte que lesdits pignons font office de pompe à engrenage pour un lubrifiant.

Fig. 1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 084 946 (FUJI JUKOGYO) <br> * page 2, lignes 19-28; résumé; figure * <br> --- | 1 | B 60 K 17/344 |
| A | FR-A-1 407 696 (RENAULT) <br> * page 1, colonne de gauche, lignes 1-26; figures 1,2 * <br> --- | 1,2 | |
| A | FR-A-2 553 721 (D. MATHIOT) <br> * résumé; figure 1 * <br> ----- | 1 | |

DOMAINES TECHNIQUES RECHERCHES (Int. Cl.5)

B 60 K

**Le présent rapport a été établi pour toutes les revendications**

| Lieu de la recherche | Date d'achèvement de la recherche | Examinateur |
|---|---|---|
| BERLIN | 15-12-1989 | KRIEGER P O |